# NEUE EUROPÄISCHE PATENTSCHRIFT

(11) **EP 0 252 246 B2**
(45) Veröffentlichungstag und Bekanntmachung des Hinweises auf die Entscheidung über den Einspruch: **06.09.1995**
(45) Hinweis auf die Patenterteilung: 02.12.1992
(21) Anmeldenummer: 87106915.9
(22) Anmeldetag: 13.05.1987
(51) Int. Cl.: G01M 13/02, G01M 15/00, G01M 17/00

(54) **Prüfeinrichtung für Antriebseinheiten**
Device for testing driving units
Dispositif d'essay d'unités d'entraînement

(30) Priorität: 10.07.1986 DE 3623264
(43) Veröffentlichungstag der Anmeldung: 13.01.1988
(73) Patentinhaber: RENK AKTIENGESELLSCHAFT, D-86159 Augsburg (DE)
(72) Erfinder: Kugler, Artur, D-8900 Augsburg (DE)
(74) Vertreter: Vetter, Ewald Otto, Dipl.-Ing.

(56) Entgegenhaltungen:
- DE-A- 2 740 197
- DE-A- 3 347 182
- US-A- 2 982 128
- US-A- 3 712 127
- MOTORTECHNISCHE ZEITSCHRIFT, Band 46, Nr. 7/8, Juli/August 1985, Seiten 271-274, Stuttgart, DE; W. KERN et al.: "Hochdynamischer hydraulischer Motorenprüfstand"
- Zeitschrift o + p "ölhydraulik und pneumatik", Bd. 29 (1985), Nr.4, Seiten 306-312
- Sonderdruck aus "Automobiltechnische Zeitschrift (ATZ)", 70.Jahrgang, Nr. 2/Februar 1968 und Nr. 3/März 1968, Seiten 1-13
- Zeitschrift o + p "ölhydraulik und pneumatik", Bd. 26 (1982), Nr.11, Seiten 795-800

## Beschreibung

Die Erfindung betrifft eine Prüfeinrichtung für Antriebseinheiten, Antriebskomponenten oder Kombinationen hiervon, nachstehend Prüfling genannt, gemäß dem Oberbegriff des Patentanspruchs.

Zur Durchführung realistischer Tests, bei denen auch das Beschleunigungs- und Schaltverhalten von Antriebskomponenten untersucht wird, müssen die in einem Fahrzeug vorhandenen rotierenden und linear bewegten Massen möglichst genau nachgebildet werden.

In der US-A-3712127 ist ein Prüfstand zum Prüfen von Fahrzeug-Antriebszügen beschrieben, welcher Elemente zur Belastung des betreffenden Antriebszuges mit dynamischen Trägheitsbelastungen aufweist, welche statischen oder üblichen Drehmomentwerten überlagert werden können. Die Trägheitsbelastung am Antriebszug kann zur Simulation von Beschleunigungs- und Bremslasten verwendet werden.

Es sind bereits Prüfeinrichtung mit elektrischem Antrieb in Form von Gleichstrommaschinen bekannt, die in Verbindung mit elektronischen Reglern eine Massensimulation ermöglichen. Elektrische Antriebe weisen jedoch folgende Nachteile auf:
a) hohe Kosten für die elektrische Maschine und für Stromrichter,
b) große Abmessungen und hohes Gewicht,
c) eine schnelle Regelung oder Drehmomentänderung ist aufgrund der hohen Induktivität der Wicklungen der elektrischen Maschine nicht möglich oder sehr aufwendig,
d) das Massenträgheitsmoment der Rotoren von elektrischen Maschinen ist 5 bis 25 mal größer als das Massenträgheitsmoment von Verbrennungsmotoren, so daß die Simulation von kleinen Massen, wie sie Verbrennungsmotoren haben, nicht mehr ausreichend schnell und genau möglich ist.

Der extrem hohe Kostenaufwand für Prüfeinrichtungen mit elektrischen Maschinen zur Simulation von Verbrennungsmotoren ist auch dadurch bedingt, daß die Prüfeinrichtungen einen sogenannten Vier-Quadranten-Betrieb ermöglichen müssen. Damit ist gemeint, daß es möglich sein muß, die Tests in beiden Drehrichtungen durchzuführen und in jeder Drehrichtung Tests bei Geschwindigkeitsbeschleunigungen und bei Geschwindigkeitsverzögerungen durchgeführt werden müssen. Dadurch muß auch eine Simulation für alle vier Betriebsarten möglich sein. Aus der Zeitschrift für o+p, ölhydraulik und pneumatik, Bd. 29 (1985), Nr.4, S. 306-312, ist ein hochdynamischer hydraulischer Motorenprüfstand bekannt, bei der die Belastungsmaschine aus einem Stufengetriebe mit drei Wellenenden besteht, wobei an einem Wellenende der Prüfling und an den beiden anderen Wellenenden je eine Axialkolbenmaschine mit einem integrierten und mit Servoventil beaufschlagten Verstellzylinder angeordnet ist. Hinzu kommen nochmals zwei baugleiche Axialkolbeneinheiten, die mit je einer normalen Drehstrom-Asynchronmaschine gekuppelt sind. Beide Axialkolbenmaschinenpaare sind hydraulisch zu einem geschlossenem System geschaltet. Die Axialkolbeneinheiten sind drehzahlgeregelt, d.h. sie geben dem Prüfling den durch ein bestimmtes Programm festgelegten hochdynamischen Drehzahlverlauf vor. In einem Sonderdruck der Automobiltechnischen Zeitschrift (ATZ), 70.Jahrgang Nr.2/Februar 1968 und Nr.3/März 1968, S. 1-13 werden Fahrzeugprüfstände beschrieben, bei denen Fahrzeugträgheiten auf elektrischem Wege, durch geregelte Gleichstrommaschinen oder Wirbelstrombremsen nachbildet werden.

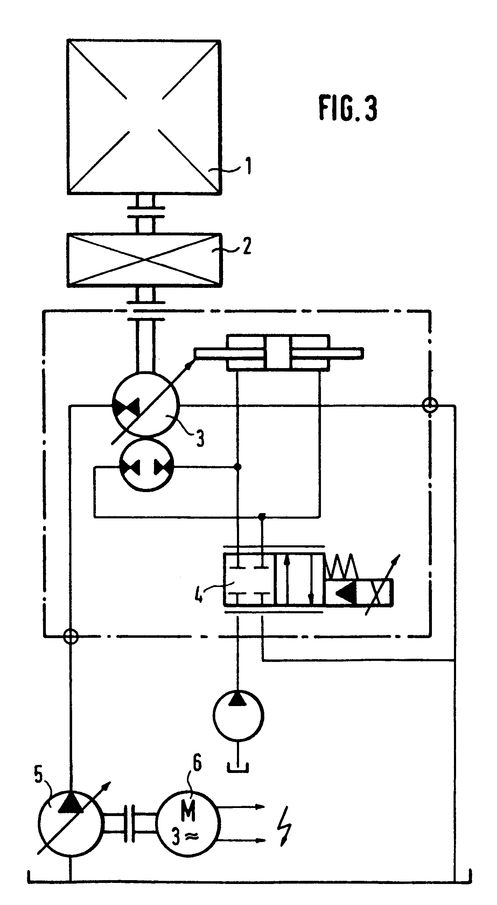

Gemäß Fig. 3 der hier beigefügten Zeichnungen gibt es bereits eine Prüfeinrichtung für Verbrennungskraftmaschinen, welche anstelle einer elektrischen, wechselweise als Motor oder als Generator arbeitenden elektrischen Gleichstrommaschine eine hydrostatische Einheit mit Sekundärregelung aufweist. Diese Prüfeinrichtung ist wesentlich preisgünstiger und konstruktiv einfacher als die Einrichtungen mit elektrischen Maschinen. Während elektrische Maschinen im Vergleich zu Verbrennungsmotoren ein vielfach größeres Massenträgheitsmoment haben, wie vorgenannt 5 bis 25-fach größer, haben hydrostatische Maschinen ein kleineres Massenträgheitsmoment als Verbrennungsmotoren. Unter dem Begriff (Verbrennungsmotoren) oder (Verbrennungskraftmaschinen) werden Benzinmotoren, Dieselmotoren und Brennkraftturbinen verstanden. Bei der bekannten Prüfeinrichtung ist eine Brennkraftmaschine (1) über ein Untersetzungsgetriebe (2) mit einer sekundärgeregelten Hydroeinheit (3) verbunden, deren Drehzahlvorgabe über ein Proportionalventil (4) mit einem Gaspedal gekoppelt ist; Im Leerlauf stellt sich an der Hydroeinheit (3) ein entsprechend kleiner Schwenkwinkel ein, was die Einstellung eines kleinen Fördervolumens bedeutet, und der notwendig ist, um bei konstantem Betriebsdruck der Hydrostatikflüssigkeit das von der Brennkraftmaschine (1) abgegebene Drehmoment abzustützen. Aus Drehzahl und Schwenkwinkel der hydrostatischen Brems- und Antriebsmaschine, d.h. der Hydroeinheit (3), ergibt sich die geförderte Menge an Hydrostatikflüssigkeit, normalerweise Öl. Wenn die Drehzahl erhöht wird, nimmt bei gleichem Schwenkwinkel die Fördermenge zu. Das Drehmoment der Brennkraftmaschine (1) wird bestimmt durch die Stellung ihrer Drosselklappe. Auf eine Zunahme des Motordrehmoments reagiert die Hydroeinheit (3), welche auch als Sekundäreinheit bezeichnet wird, mit dem Reaktionsmoment über eine Vergrößerung des Schwenkwinkels, wobei die Fördermenge bei konstanter Drehzahleingabe ebenfalls größer wird. Der Betriebsdruck im System bleibt bei diesem Vorgang konstant. Er wird geregelt und eingestellt an einer zweiten Hydroeinheit (5), welche als Motor wirkend einen Elektromotor (6) antreibt. Der Elektromotor kann ein Drehstromasynchronmotor sein. Er wird von der als Motor arbeitenden zweiten Hydroeinheit (5) in den übersynchronen Drehzahlbereich gezwungen, arbeitet dabei als Generator und speist Strom in das Stromnetz zurück. Bei Simulation von Bergabfahrten arbeitet die druckgeregelte zweite Hydroeinheit (5) als Pumpe, die erste, als Sekundäreinheit bezeichenbare Hydroeinheit (3) als Motor zum Antrieb der Brennkraftmaschine (1).

Durch die Erfindung soll die Aufgabe gelöst werden, für die Prüfeinrichtung ein Antriebs- und Bremssystem zu schaffen, das bei möglichst kleinem Aufwand eine wirklichkeitsgetreue Simulation auch sehr kleiner Massenträgheitsmomente und gleichzeitig eine genaue Regelung und Einstellung der jeweils gewünschten Belastung des Prüflings ermöglicht, wobei auch die Forderung zu berücksichtigen ist, Massenträgheitsmomente in einem sehr weiten Bereich und mit hoher Genauigkeit nachzubilden und gleichzeitig den Bauaufwand klein zu halten.

Diese Aufgabe wird gemäß der Erfindung durch den Patentanspruch gelöst.

Die hydrostatische Brems- und Antriebsmaschine arbeitet im Bremsbetrieb als Pumpe und im Antriebsbetrieb als Motor. Sie ist zur Regulierung ihrer Fördermenge an eine hydraulische Schalteinrichtung mit steuerbaren, schnellen Servoventilen und Servokolben angeschlossen und arbeitet vorzugsweise in einem geschlossenen Hydrostatikflüssigkeitskreislauf. Das wichtigste Merkmal dabei ist die extrem schnelle Änderung des Drehmoments, die durch entsprechende Verstellung des Schwenkwinkels und damit des Fördervolumens der hydrostatischen Brems- und Antriebsmaschine erreicht wird. Die Steuerung und Regelung des Fördervolumens erfolgt durch einen oder mehrere elektrohydraulische Regelkreise. Zur Schwungmassensimulation wird die augenblickliche Beschleunigung des Prüflings vorzugsweise am Antriebsstrang zwischen Antriebsmaschine und Prüfling dauernd gemessen, über einen Regler das erforderliche Simulationsdrehmoment und dessen Wirkrichtung bestimmt, und dann ein entsprechendes Sollwertsignal dem Regelkreis zugeführt. Durch den Regler wird dabei die hydrostatische Brems- und Antriebsmaschine so verstellt, daß der elektronisch gemessene Drehmoment-lstwert mit dem Sollwert übereinstimmt und damit der Prüfling mit der richtigen Momentan-Drehmomentbelastung beaufschlagt wird. Die hydrostatische Brems- und Antriebsmaschine kann eine oder mehrere Hydroeinheiten enthalten. Durch einen Rechner kann das statische Lastmoment nach einem vorgegebenen Programm so eingestellt werden, daß zu jedem Zeitpunkt die Summe aus statischem Lastdrehmoment plus Simulationsdrehmoment gleich dem Gesamtdrehmoment M_{ges} auf den Prüfling wirkt. Das "statische Lastdrehmoment" ist dabei das Drehmoment des Prüflings im Betrieb ohne Geschwindigkeitsänderung.

Die realen Schwungmassen können mit der hydrostatischen Brems- und Antriebsmaschine wahlweise gekuppelt werden. Die Baugröße, oder die Anzahl der zur Bildung der hydrostatischen Brems- und Antriebsmaschine erforderlichen Hydrostatik-Einheiten, wird wesentlich durch die Größe des zu simulierenden Massendrehmoments bestimmt. Wenn die jeweils erforderliche Masse relativ feinstufig durch Schwungräder real dargestellt werden kann, muß nur noch ein kleinerer Anteil (ca. 10 % bis 25 % ) der Gesamtmasse durch Simulation erzeugt werden. Diese Lösung ergibt erheblich kleinere Drehmomente, die von der hydrostatischen Brems- und Antriebsmaschine erzeugt werden müssen, so daß deren Einheiten wesentlich kleiner und billiger ausgeführt werden können.

Bei sehr schnellen Änderungen der Drehbeschleunigung oder Drehverzögerung treten bei jeder Massensimulation Fehler auf, die durch unvermeidliche Zeitverzögerungen bei der Drehmomentregelung entstehen. Durch die erfindungsgemäße Verwendung von zusätzlichen realen Massen können diese Fehler erheblich verringert werden, weil
a) der Hauptmassenanteil durch reale Schwungmassen vorhanden ist, und
b) die Drehmomentregulierung mit Hydro-Einheiten um ein Vielfaches schneller durchgeführt werden kann als mit Elektromaschinen größerer Leistung.

Die Erfindung wird im folgenden mit Bezug auf die beiliegenden Zeichnungen näher beschrieben, in welchen Ausführungsbeispiele der Erfindung dargestellt sind. Im einzelnen zeigen
- Fig. 1: ein Schaltbild eines hydrostatischen Antriebs- und Bremssystems mit Schwungmassensimulation für eine Prüfeinrichtung nach der Erfindung,
- Fig. 2: eine schematische Darstellung einer weiteren Ausführungsform eines hydrostatischen Antriebs- und Bremssystems mit Schwungmassensimulation und mit wahlweise zuschaltbaren realen Schwungmassen einer Prüfeinrichtung nach der Erfindung für Antriebseinheiten, und
- Fig. 3: ein bekanntes hydrostatisches Antriebs- und Bremssystem.

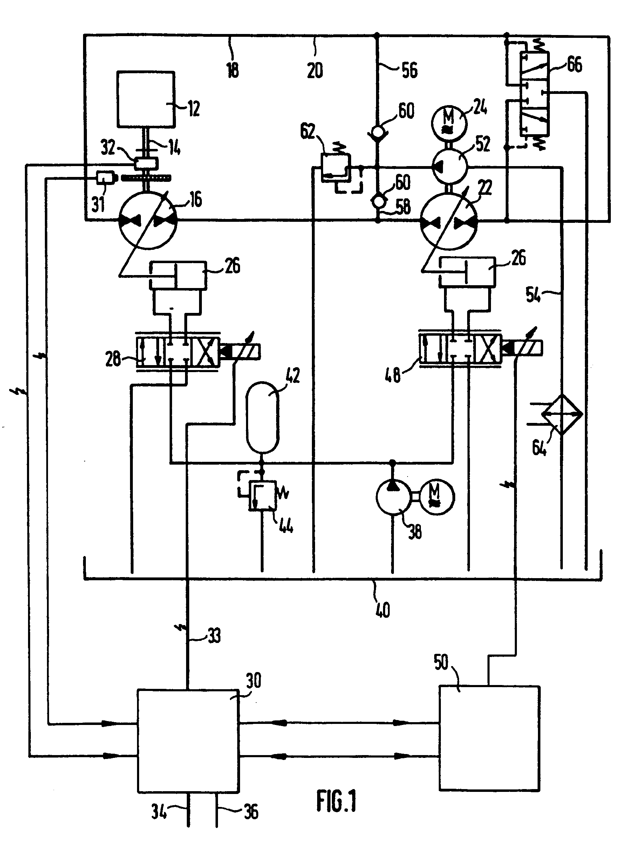

Bei der in Fig. 1 dargestellten Ausführungsform ist ein Prüfling 12 über eine Antriebswelle 14 mit einer hydrostatischen Brems- und Antriebsmaschine 16 verbunden. Die Maschine 16 ist eine Hydroeinheit, welche je nach Drehmomentrichtung der Antriebswelle 14 als Pumpe oder als Motor arbeitet und je nach Drehrichtung der Antriebswelle 14 die Hydraulikflüssigkeit in der einen oder anderen Richtung durch einen hydraulischen Energiekreislauf 18 fördert oder aus diesem in der ein oder anderen Richtung die Hydraulikflüssigkeit erhält. Die Hydroeinheit 16 ist ein Bestandteil des geschlossenen Energiekreislaufes 18. In dem die beiden Hydraulikanschlüsse extern verbindenden Leitungssystem 20 des Energiekreislaufes befindet sich eine weitere Hydroeinheit 22. Diese arbeitet je nach Drehmomentrichtung und Kraftflußrichtung als Hydropumpe oder als Hydromotor. Die beiden Hydroeinheiten 16 und 22 arbeiten wechselweise als Hydropumpe und Hydromotor, wobei jeweils die eine als Hydropumpe arbeitet, wenn die andere als Hydromotor arbeitet, und umgekehrt. Die zweite Hydroeinheit 22 wandelt die Bremsenergie der ersten Hydroeinheit 16, wenn diese als Pumpe arbeitet, in elektrische Energie um, indem sie eine elektrische Maschine 24 antreibt, welche als Generator arbeitet und elektrischen Strom in das elektrische Netz liefert. Dieser Zustand ist dann gegeben, wenn der Prüfling 12 die erste Hydroeinheit 16 antreibt. Bei umgekehrter Betriebsweise, wenn also die erste Hydroeinheit 16 als Motor arbeitet, arbeitet die elektrische Maschine 24 als Elektromotor, welcher die zweite Hydroeinheit 22 antreibt, welche dadurch als Pumpe arbeitet und Hydraulikflüssigkeit der als Motor arbeitenden ersten Hydroeinheit 16 zuführt. Wenn die erste Hydroeinheit 16 nur als Pumpe arbeitet, um Bremsenergie zum Abbremsen des Prüflings 12 zu erzeugen, dann kann anstelle der zweiten Hydroeinheit 22 ein als Strömungsdrossel wirkendes Druckregelventil zur Vernichtung der Bremsenergie in das Leitungssystem 20 eingebaut sein.

Der Schwenkwinkel der Hydroeinheit 16, und damit das Fördervolumen dieser Hydroeinheit 16, wird über einen Verstellzylinder 26 durch ein Servoventil 28 eingestellt, welches von einem Regler 30 gesteuert wird. Die Steuerung durch den Regler 30 erfolgt in Abhängigkeit vom Drehmoment an der Antriebswelle 14, zu welchem Zwecke ein Drehmoment-Meßwertaufnehmer 32 des Reglers 30 an der Antriebswelle 14 angeordnet ist. Dem Regler 30 werden außerdem die Größe der zu simulierenden Masse vorgegeben, was durch eine Leitung 34 dargestellt ist, sowie ein statischer Belastungswert, welcher dem statischen Belastungswert an der Antriebswelle 14 entspricht, wenn keine Beschleunigung oder Verzögerung dessen Drehzahl auftritt, was durch eine Leitung 36 am Regler 30 symbolisch dargestellt ist. In Abhängigkeit von der Ermittlung der Drehzahländerung pro Zeiteinheit an der Antriebswelle 14, was durch den Drehzahl-Meßwertaufnehmer 31 festgestellt wird, und in Abhängigkeit von dem vorgegebenen Wert der zu simulierenden Massengröße sowie dem Wert der statischen Belastung, erzeugt der Regler 30 auf seiner elektrischen Steuerleitung 33 ein elektrisches Sollwert-Signal für das Servoventil 28, entsprechend welchem über das Servoventil 28 und den Verstellzylinder der Schwenkwinkel der Hydroeinheit 16 so eingestellt wird, daß diese Hydroeinheit 16 ein einer zu simulierenden Schwungmasse entsprechendes Drehmoment erzeugt. Diese simulierte Schwungmasse kann größer oder kleiner als die in der Praxis tatsächlich vorhandene Masse sein, je nach den Vorgaben für den Regler 30 auf den Leitungen 34 und 36. Die Steuerdruckflüssigkeit für den Verstellzylinder 26 wird durch eine Servopumpe 38 einem Sumpf 40 entnommen, durch ein Überdruckventil 44 und einen Druckspeicher 42 konstant gehalten, und über das Servoventil 28 dem Verstellzylinder 26 zugeführt.

Die Servopumpe 38 fördert Steuerdruckflüssigkeit auch zu einem zweiten Servoventil 48, welches über einen zweiten Verstellzylinder 26 den Schwenkwinkel und damit das Fördervolumen der zweiten Hydroeinheit 22 einstellt. Die Steuerung und Regelung des zweiten Hydroventils 48 erfolgt durch einen zweiten Regler 50, welcher in Abhängigkeit vom ersten Regler 30 arbeitet.

Eine von der Hydroeinheit 22 angetriebene Pumpe 52 saugt über eine Leitung 54 Hydraulikflüssigkeit aus dem Sumpf 40 und erneuert über Leitungen 56 und 58 mit Einwegventilen 60 Leckflüssigkeit im Leitungssystem 20 des Energiekreislaufes 18 beidseitig der Anschlüsse der Hydroeinheiten 16 und 22. Ein Ventil 62 zwischen den beiden Einwegventilen 60 hält einen konstanten Druck am Ausgang der Pumpe 52. In der Saugleitung 54 der Pumpe 52 befindet sich ein Wärmetauscher 64. Ein Spülventil 66 führt überschüssige Hydraulik aus dem Energiekreislaut 18 in den Sumpf 40 zurück.

Dem Regler 30 können von einem Rechner variable Belastungswerte eingegeben werden, welche den in der Praxis auftretenden Belastungswerten des Prüflings 12 entsprechen.

Anstelle einer einzigen Hydroeinheit 16 können auch mehrere Hydroeinheiten miteinander kombiniert werden. Das gleiche gilt für die Hydroeinheit 22. Die Schwenkwinkel und damit das Fördervolumen der Hydroeinheiten 16 und 22 können unabhängig voneinander oder in Abhängigkeit voneinander eingestellt werden, je nach Erfordernis der Prüfeinrichtung in der Praxis.

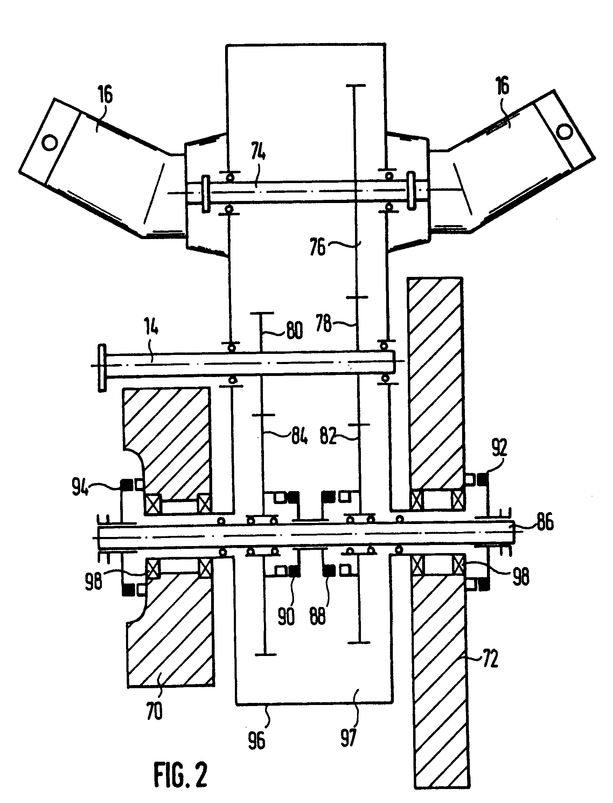

Der Prüfling 12 kann ein Verbrennungsmotor, ein Getriebe, ein Zahnrad, eine Kupplung, eine Bremse, eine Fahrzeugachse, eine Antriebswelle und dergleichen Antriebselement sein. Je nach Art des Prüflings wird er wechselweise von verschiedenen Schwungmassen angetrieben oder er treibt diese Schwungmassen an. Diese Schwungmassen werden von der Hydroeinheit 16 simuliert. Die Simulation mit einer Hydroeinheit ist wesentlich genauer, und sie folgt wesentlich schneller Drehmomentänderungen, als elektrische Motor/Generatormaschinen zur Massensimulation. Elektrische Maschinen haben außerdem den Nachteil, daß sie bei Regelvorgängen über den Sollwert überschwingen, während mit Hydroeinheiten ein solches Überschwingen der Regelvorgänge weitgehend vermieden werden kann. Aber auch mit Hydroeinheiten kann ein kleiner Restfehler insbesondere bei hohen Beschleunigungswerten nicht völlig vermieden werden. Deshalb wird gemäß der Erfindung entsprechend Fig. 2 der Zeichnungen vorgeschlagen, einen möglichst großen Anteil der Schwungmassen, mit denen der Prüfling 12 in der Praxis tatsächlich zusammenarbeitet, durch reale Schwungmassen in Form von Schwungrädern zu ersetzen und nur einen kleineren Anteil der in der Praxis vorhandenen Schwungmassen durch eine oder mehrere Hydroeinheiten 16 zu ersetzen. Dadurch werden Fehler in der Größe der simulierten Masse einschließlich der durch Schwungräder ersetzten Schwungmassen relativ zu den in der Praxis tatsächlich vorhandenen Schwungmassen auf ein vernachlässigbares Minimalmaß reduziert.

Eine besonders vorteilhafte Ausführungsform nach der Erfindung ist in Fig. 2 dargestellt, bei welcher die in der Praxis vorhandenen Schwungmassen durch zwei Schwungräder 70 und 72 als reale Schwungmassen ersetzt sind und durch zwei Hydroeinheiten 16 simuliert werden. Je nach Verfahren des Tests für den Prüfling 12 können die realen Schwungmassen 70 und 72 zusammen mit den durch die Hydroeinheiten 16 simulierten Schwungmassen gleich groß, kleiner oder größer eingestellt werden wie die in der Praxis tatsächlich vorhandenen, mit dem Prüfling 12 zusammenwirkenden Schwungmassen. Anstelle von zwei Hydroeinheiten 16, kann selbstverständlich auch nur eine oder mehrere verwendet werden, die über eine gemeinsame Abtriebswelle 74 mit einem darauf befestigten Zahnrad 76 über ein Zahnrad 78 mit der Antriebswelle 14 antriebsmäßig verbunden sind. Die Verwendung von mehreren Hydroeinheiten 16 statt einer einzigen Hydroeinheit 16 hat den Vorteil, daß sie billiger sind als eine einzige große Hydroeinheit, daß sie außer im Parallelbetrieb auch einzeln betrieben werden können, um kleine Schwungmassen zu simulieren, während mit ihnen im Parallelbetrieb große Schwungmassen simuliert werden können. Auf der Antriebswelle 14 sitzt ein weiteres mit ihr drehfest verbundenes Zahnrad 80.

Die beiden Zahnräder 78 und 80 haben einen unterschiedlich großen Durchmesser und sind dadurch mit unterschiedlichem Übersetzungsverhältnis mit unterschiedlich großen Zahnrädern 82 und 84 in Eingriff, welche drehbar auf einer Anschlußwelle 86 gelagert sind, mit welcher sie je über eine Kupplung 88 oder 90 wahlweise drehfest verbunden werden können. Die Anschlußwelle 86 ist über Kupplungen 92 und 94 wahlweise oder gleichzeitig mit dem einen oder anderen oder beiden Schwungrädern 70 und 72 drehfest verbindbar. Die Schwungräder 70 und 72 sind an einem Getriebegehäuse 96 durch Lager 98 drehbar gelagert.

Die Zahnräder 78 bis 84 bilden zusammen mit den Kupplungen 88 und 90 ein Zwei-Stufen-Getriebe 97. Durch Vorwahl von entsprechenden Schaltzuständen zusammen mit den Kupplungen 92 und 94 können sieben verschiedene reale Schwungmassen und damit auch reale Massenträgheitsmomente, bezogen auf die Antriebswelle 14, gebildet werden. Durch eine solche Kombination von realen Schwungmassen und zusätzlich durch die Hydroeinheit oder Hydroeinheiten 16 simulierten Schwungmassen wird eine erhebliche Reduzierung des Bauaufwandes für die Schwungmassensimulation und eine genauere Nachbildung der jeweils gewünschten Schwungmasse erzielt.

Die Baugröße und die Anzahl der erforderlichen Hydroeinheiten 16 wird wesentlich durch die erforderliche Simulationsschwungmasse und damit auch durch das erforderliche Simulationsdrehmoment bestimmt. Wenn die jeweils erforderliche Schwungmasse schon feinstufig durch Schwungräder dargestellt werden kann, muß nur noch ein kleinerer Anteil, beispielsweise von 10 % bis 25 %, der Gesamtschwungmasse durch Simulation erzeugt werden. Diese Lösung mit realen Schwungmassen als Ersatz für die in der Praxis vorhandenen Schwungmassen ermöglicht die Verwendung von Hydroeinheiten, welche ein erheblich kleineres Drehmoment haben und damit kleiner und billiger sind.

Bei schnellen Änderungen der Drehzahl treten bei jeder Massensimulation Fehler auf, die durch unvermeidliche Zeitverzögerungen bei der Drehmomentregelung entstehen. Mit der erfindungsgemäßen Lösung können diese Fehler erheblich verringert werden, weil
a) der Hauptanteil der zu simulierenden Schwungmasse real durch Schwungräder vorhanden ist, und
b) die Drehmomentregelung bei Hydroeinheiten um ein Mehrfaches schneller und genauer erfolgt als mit Elektromaschinen.

## Patentansprüche

1. "Prüfeinrichtung für Antriebseinheiten, Antriebskomponenten oder Kombinationen hiervon, nachstehend Prüfling genannt, mit
- einer hydrostatischen Brems- und Antriebsmaschine (16), die mit variablem Fördervolumen alternativ als Pumpe oder Motor betreibbar und mit dem Prüfling über einen Antriebsstrang verbindbar ist, und
- einer Stelleinrichtung (26, 28, 30) zur Einstellung des Fördervolumens in Abhängigkeit von einem von der hydrostatischen Brems- und Antriebsmaschine zu erzeugenden Drehmoment,
**gekennzeichnet** durch folgende Merkmale:
- die für eine praxisgerechte Prüfung des Prüflings (12) erforderliche Schwungmasse wird mindestens teilweise durch eine von der positiven oder negativen Beschleunigung des Prüflings abhängige schnelle Änderung des Drehmoments der hydrostatischen Brems- und Antriebsmaschine (16) simuliert,
- zur Drehmomentänderung der hydrostatischen Brems- und Antriebsmaschine (16) dient ein sehr schneller Regelkreis (16, 26, 28, 30, 32), der die Fördermenge der in einem hydraulischen Energiekreislauf (18 ) arbeitenden hydrostatischen Brems- und Antriebsmaschine (16) durch einen elektronischen Regler (30) und einen hydraulischen Servokolben eines Verstellzylinders (26) abhängig von der augenblicklichen Drehbeschleunigung des Prüflings (12) so verstellt, daß zu jedem Zeitpunkt die gewünschte quasistatische Belastung des Prüflings, die bei Nicht-Beschleunigung und Nicht-Verzögerung vorliegt, und zusätzlich das zur Beschleunigung oder Verzögerung einer vorgegebenen Masse erforderliche Drehmoment erzeugt wird,
- die durch die hydrostatische Brems- und Antriebsmaschine (16) simulierbare Schwungmasse ist stufenlos oder mindestens feinstufig einstellbar,
- zur Simulation eines weiteren Teils der für die praxisgerechte Prüfung des Prüflings (12) erforderlichen Schwungmasse sind mindestens zwei zuschaltbare reale Schwungmassen (70, 72) vorgesehen, die wahlweise einzeln oder in Kombination mit der simulierten Schwungmasse der hydrostatischen Brems- und Antriebsmaschine (16) kombinierbar sind,
- die in Form von realen Schwungmassen (70, 72) vorhandene Schwungmasse ist größer als die mit der hydrostatischen Brems- und Antriebsmaschine (16) simulierbare Schwungmasse,
- zwei unterschiedlich große Schwungmassen (70, 72) sind über ein zweistufiges Schaltgetriebe (97) mit dem Prüfling (12) verbindbar, derart, daß insgesamt sieben unterschiedliche Schwungmassen und entsprechende Massenträgheitsmomente auf den Prüfling (12) erzeugt werden können."

## Claims

1. Testing apparatus for driving units, driving components or combinations thereof, hereinafter called test pieces, comprising
- a hydrostatic braking and driving machine (16) which functions alternatively as a pump or motor having variable output volume and which is connectable with the test piece by means of a driving link, and
- an adjusting means (26, 28, 30) for setting the output volume in dependence upon a torque to be produced by the hydrostatic braking and driving machine,
characterised by the following features:
- the gyratory mass necessary for a true practical testing of the test piece (12) is simulated at least partially by a rapid change in the torque of the hydrostatic braking and driving machine (16), dependent upon the positive or negative acceleration of the test piece,
- for the change in torque of the hydrostatic braking and driving machine (16) there serves a very rapidly reacting control circuit (16, 26, 28, 30, 32) which adjusts the output of the hydrostatic braking and driving machine (16) operating within a hydraulic energy circuit (18) by an electronic controller (30) and a hydraulic servo-piston of a setting cylinder (26) in dependence upon the instantaneous rotary acceleration of the test piece (12) so that at any point in time there is created the desired quasi-static loading of the test piece which exists under zero acceleration and zero deceleration, and additionally the torque necessary for the acceleration or deceleration of a given mass,
- the gyratory mass simulatable by the hydrostatic braking and driving machine (16) can be adjusted steplessly or at least in fine steps,
- for the simulation of a further part of the gyratory mass necessary for the true practical testing of the test piece (12) two connectable real gyratory masses (70, 72) are provided which can be combined selectively, individually or in combination, with the simulated gyratory mass of the hydrostatic braking and driving machine (16),
- the gyratory mass provided in the form of real gyratory masses (70, 72) is greater than the gyratory mass simulatable with the hydrostatic braking and driving machine (16),
- two gyratory masses (70, 72) of different magnitudes are connectable to the test piece (12) by means of a two-stage changeover gear (97), in such a way that a total of seven different gyratory masses and corresponding moments of inertia can be produced on the test piece (12).

## Revendications

1. Dispositif d'essai d'unités d'entraînement, d'éléments constitutifs d'entraînements ou de combinaisons de ces derniers, ci-après désignés par "objet testé", comprenant
- une machine hydrostatique (16) de freinage et d'entraînement pouvant fonctionner alternativement comme une pompe ou un moteur, avec volume refoulé variable, et pouvant être mise en liaison avec l'objet testé, par l'intermédiaire d'un segment d'entraînement, et
- un dispositif de réglage (26, 28, 30) pour ajuster le volume refoulé en fonction d'un couple de rotation devant être engendré par la machine hydrostatique de freinage et d'entraînement,
caractérisé par les particularités suivantes :
- la masse d'inertie nécessaire à un examen correct de l'objet testé (12) est simulée, au moins partiellement, par une variation rapide, dépendant de l'accélération positive ou négative de l'objet testé, du couple de rotation de la machine hydrostatique (16) de freinage et d'entraînement ;
- un circuit de régulation très rapide (16, 26, 28, 30, 32), servant à faire varier le couple de rotation de la machine hydrostatique (16) de freinage et d'entraînement, ajuste la quantité refoulée par ladite machine hydrostatique (16) de freinage et d'entraînement fonctionnant dans un circuit d'énergie hydraulique (18), par l'intermédiaire d'un régulateur électronique (30) et du piston hydraulique asservi d'un vérin de réglage (26), en fonction de l'accélération rotatoire de l'objet testé (12) à l'instant considéré, de manière à engendrer, à chaque instant, la contrainte quasi statique souhaitée de l'objet testé, présente en l'absence d'accélération et en l'absence de ralentissement, avec génération additionnelle du couple de rotation nécessaire à l'accélération ou au ralentissement d'une masse préétablie ;
- la masse d'inertie, pouvant être simulée par la machine hydrostatique (16) de freinage et d'entraînement, peut être ajustée en continu ou au moins avec progression fine ;
- au moins deux masses d'inertie effectives (70, 72) pouvant être mises en circuit, prévues pour la simulation d'une part supplémentaire de la masse d'inertie nécessaire à l'examen correct de l'objet testé (12), peuvent être sélectivement combinées, individuellement ou en combinaison, à la masse d'inertie simulée de la machine hydrostatique (16) de freinage et d'entraînement ;
- la masse d'inertie, revêtant la forme de masses d'inertie effectives (70, 72), est supérieure à la masse d'inertie pouvant être simulée à l'aide de la machine hydrostatique (16) de freinage et d'entraînement ; et
- deux masses d'inertie (70, 72) différemment grandes peuvent être reliées à l'objet testé (12), par l'intermédiaire d'une transmission sélective (97) à deux paliers, de telle sorte que puissent être engendrés, au total, sept masses d'inertie différentes et des couples d'inertie de masse correspondants agissant sur l'objet testé (12).
